# EUROPEAN PATENT APPLICATION

(11) **EP 3 738 483 A1**
(43) Date of publication of application: **18.11.2020**
(21) Application number: 20174508.0
(22) Date of filing: 13.05.2020
(51) Int. Cl.: A47J 31/41, A47J 31/44

(54) **MILK COOLING DEVICE THAT CAN BE AUTOMATICALLY SANITIZED**

(30) Priority: 16.05.2019 IT 201900006890
(71) Applicant: Leovic Srls, 46030 Pomponescco (MN) (IT)
(72) Inventor: BONDAVALLI, Fabrizio, 46030 Dosolo (MN) (IT); BONESI, Ugo, 46030 Dosolo (MN) (IT)
(74) Representative: Mari, Marco Giovanni

(57) **Abstract**

Milk cooling device (1) that can be automatically sanitized, comprising a heat exchanger vessel (2) adapted to contain a cooling fluid (F), comprising a bottom (20); an inlet (2a) and an outlet (2b) for said fluid (F); heat exchanger means (3) adapted to receive said milk to be cooled immersed in the heat exchanger vessel (2); a cooling circuit for the fluid (F) comprising: a storage tank (4) for the cooling fluid (F) having a free surface level; cooling means for the cooling fluid; delivery (5) and return (6) ducts adapted to connect the storage tank (4) to the heat exchanger vessel (2); a recirculation pump (7) for said cooling fluid connected to said delivery duct (5). Said inlet (2a) for said cooling fluid (F) is arranged in proximity of the bottom (20) of said heat exchanger vessel (2). The return duct (6) comprises an upside-down U-shaped pipe, provided with a first (6') and with a second (6") arm whose free ends are connected to said storage tank (4), and at least one of them is connected above said free surface level. The first arm (6') comprises a hole (8), acting as overflow by-pass, in the portion of said first arm (6') inside said heat exchanger vessel (2), and said hole (8) is adapted to determine the level of filling of said heat exchanger vessel (2) with said cooling fluid (F), where said heat exchanger vessel (2) is adapted to be emptied with the contribution of air entering through said hole (8).

## Description

### Technical field

The invention is aimed at the sector of automatic, super automatic and semi-automatic coffee machines for the catering industry (hotels, restaurants and catering services), and more in detail concerns a milk cooling device that can be automatically sanitized, in particular to process milk to be used in the preparation of beverages based on milk and foamed milk.

### Background art

A certain amount of cold milk is required to form thick and full-bodied foamed milk.

In automatic coffee machines used in the catering industry, milk used is often kept at room temperature before being processed.

These automatic coffee machines normally comprise a foaming pump unit that collects the milk from a special container and combines it with ambient air to create foam.

It is not always possible to manage the holding temperature of the milk in said container, which can consequently also be at room temperature.

Unfortunately, when using a milk base with too high a temperature, the foamed milk obtained is not the right consistency and looks rather unappealing.

Therefore, it is essential to use cold milk, substantially at a temperature of below 7°C.

The document IT0001409125, by the same inventor as the current patent application, discloses a device for cooling liquid foodstuffs, in particular milk, which allows the initial temperature of the milk to be lowered quickly so that it can be used to prepare foam.

This device substantially comprises:
- heat exchanger means adapted to receive the milk to be cooled comprising a series of open ducts through which the milk passes by gravity;
- a heat exchanger vessel containing a cooling fluid provided with an inlet and with an outlet for said fluid;
- a cooling circuit for said fluid partly external to said heat exchanger vessel;
- a supply inlet for said milk to be cooled;
- a delivery outlet of the cooled milk,
where said heat exchanger means are immersed in said heat exchanger vessel to transfer heat from said milk to be cooled to said cooling fluid.

As a result of said device, advantageously, the milk that reaches the jug used by the barista to produce foam is sufficiently cold to obtain a thick and creamy foam, without large air bubbles and with an appealing look.

It is clear that this device requires regular washing and sanitizing processes of the heat exchanger means through which the milk flows and of all the other components that come into contact with the milk.

Unfortunately, it is not advisable for the sanitizing product to pass through the heat exchanger means while they are cooled, i.e., when the heat exchanger vessel is still filled with the cooling fluid.

In order to be effective, the sanitizing product must be used at high temperature, in the order of 90°C.

Therefore, there is a risk of the cooling fluid acting on the sanitizing product flowing through the heat exchanger means, reducing its effectiveness.

In detail, operators are therefore required to empty the heat exchanger vessel and manually introduce the sanitizing product through the supply inlet for the milk into the tubular ducts that form the heat exchanger means. The sanitizing product substantially percolates by gravity inside the heat exchanger means and exits from the cooled milk delivery outlet.

Unfortunately, cleaning can be somewhat ineffective and above all cannot be controlled or automated, requiring the presence of an operator, and is therefore a procedure unsuitable for use in automatic machines.

### Presentation of the invention

The invention intends to overcome these limits, providing a milk cooling device with a milk cooling circuit that is washable and can be automatically sanitized, without the intervention of operators.

Therefore, an object of the invention is to provide a device that allows the initial temperature of the milk to be lowered rapidly to allow it to be immediately used to obtain cold milk and thick and creamy foam.

A further object of the invention is to be able to use said device inside, or in combination with, coffee machines that automatically dispense foamed milk and multi-function automatic machines that dispense different products comprising beverages based on foamed milk.

These objects are achieved with a milk cooling device that can be automatically sanitized, comprising:
- a heat exchanger vessel adapted to contain a cooling fluid, comprising a bottom, an inlet and an outlet for said fluid;
- heat exchanger means adapted to receive said milk to be cooled immersed in said heat exchanger vessel, comprising a supply inlet for said milk to be cooled and a delivery outlet of the cooled milk;
- a cooling circuit for said fluid comprising:
- a storage tank for said cooling fluid having a free surface level;
- cooling means for said cooling fluid;
- delivery and return ducts adapted to connect said storage tank to said heat exchanger vessel respectively at said inlet and at said outlet;
- a recirculation pump for said cooling fluid connected to said delivery ducts,
characterized in that:
- said inlet for said cooling fluid is arranged in proximity of said bottom of said heat exchanger vessel;
- said return duct comprises an upside-down U-shaped pipe, provided with a first and with a second arm whose free ends are both connected to said storage tank, and at least one of them is connected above said free surface level;
- said first arm comprises a hole, acting as overflow by-pass, provided in the portion of said first arm inside said heat exchanger vessel, and said hole is adapted to determine the level of filling of said heat exchanger vessel with said cooling fluid,
where said heat exchanger vessel is adapted to be emptied with the contribution of air entering through said hole.

According to a first aspect of the invention, it is the free end of said second arm that is connected to said storage tank above said free surface level.

Alternatively, said heat exchanger vessel is adapted to be emptied through said delivery duct when said recirculation pump is switched off, or through a suitable discharge duct connected between the bottom of said heat exchanger vessel and said storage tank.

In particular, said recirculation pump is positioned below the filling level of said storage tank.

Advantageously, said recirculation pump is of submersible type, contained inside said storage tank.

According to further aspects of the invention:
- said cooling means comprise a refrigeration circuit provided with a compressor;
- said storage tank comprises bleed means adapted to place the inner volume of the tank positioned above said free surface in communication with the external environment.

In a possible variant of the invention, said heat exchanger means are of the closed loop type and comprise at least one pipe, arranged between said supply inlet and said delivery outlet.

Preferably, said pipe is in the shape of a serpentine.

Advantageously, said device comprises a duct adapted to connect said supply inlet alternatively to means for containing milk to be cooled or a sanitizing product for automatic cleaning of said device.

Moreover, said device comprises a milk foaming pump unit.

The invention also relates to a multi-function machine for dispensing beverages comprising foamed milk comprising a milk cooling device that can be automatically sanitized.

The main advantage of the device according to the invention derives from being able to automatically empty the heat exchanger vessel before performing sanitizing operations, improving the cleansing effect.

Therefore, the sanitizing product operates inside the pipes of the heat exchanger means which are no longer cold and is thus able to maintain its temperature without losing its disinfectant power and without condensating and consequently without leaving harmful residues inside the heat exchanger means.

The heat exchanger vessel discharges the cooling fluid directly into the storage tank of the cooling circuit and therefore there is no loss of cooling fluid.

The storage tank comprises bleed means that offset any variations in the flow rate of the recirculation pump due to wear, and any calibration defects between the flow rate of the pump and the flow rate of the overflow by-pass hole produced on the return duct.

The heat exchanger means structured in a closed loop circuit through which the sanitizing product fed under pressure, and thus with force, ensures more effective cleaning with a flow rate of the sanitizing product that is controlled at all times.

The possibility of moving the milk supply duct from the tank that contains it to a tank that contains the sanitizing fluid allows sanitizing of the whole circuit through which the milk flows, including the milk supply duct.

### Brief description of the drawings

The advantages of the invention will be more apparent hereunder, in the description of a preferred embodiment provided by way of nonlimiting example, and with the aid of the figures, wherein:

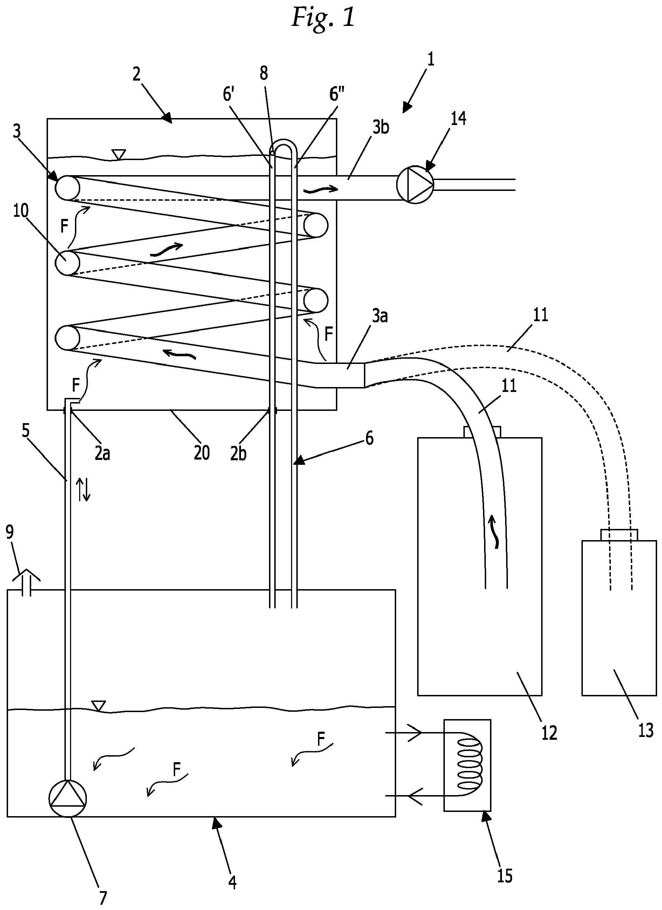

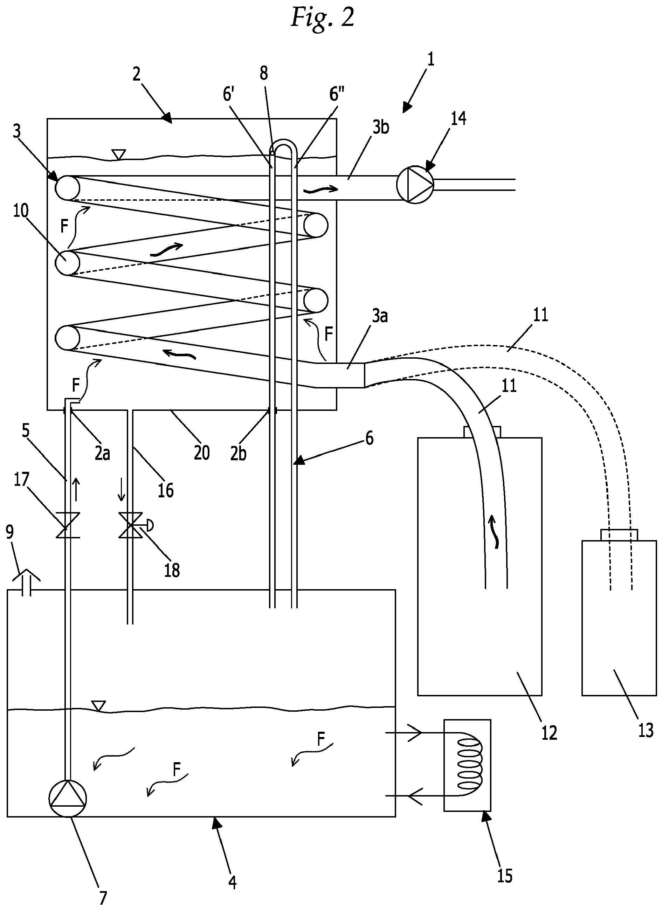

Figs. 1 and 2 represent, in a schematic section along a vertical plane, a milk cooling device that can be automatically sanitized, according to two possible variants of the invention.

### Detailed description of a preferred embodiment of the invention

The device 1 illustrated in the figures is adapted to be used on multi-function automatic, super automatic and semi-automatic machines, adapted to dispense beverages comprising foamed milk.

Said machines comprise means for containing and supplying milk 12 substantially at room temperature which requires to be cooled before being frothed to become thick and creamy foam. For this purpose, said machines comprise milk cooking devices 1.

The milk cooling device 1 that can be automatically sanitized illustrated in the figures essentially comprises:
- a heat exchanger vessel 2 adapted to contain a cooling fluid F up to a given free surface level;
- heat exchanger means 3, adapted to receive said milk to be cooled, immersed in said heat exchanger vessel 2.

Said fluid F, generally water, is cooled by a specific cooling circuit belonging to said device 1.

Said heat exchanger vessel 2 is produced with a substantially cylindrical container and comprises a bottom 20, an inlet 2a and an ordinary outlet 2b for said fluid.

Said inlet 2a for said cooling fluid belongs to said bottom 20 of said heat exchanger vessel 2.

Said heat exchanger means 3 comprise a supply inlet 3a for said milk to be cooled and a delivery outlet 3b of the cooled milk.

Said device 1 comprises a duct 11, at least partly flexible, adapted to connect said supply inlet 3a to means for containing milk to be cooled 12.

Said heat exchanger means 3 are of the closed loop type and comprise at least one pipe, arranged between said supply inlet 3a and said delivery outlet 3b.

In the variant illustrated, said heat exchanger means comprise a single pipe 10, also arranged between said supply inlet 3a and said delivery outlet 3b, wound around itself to create a serpentine. Also in this case, the lateral surface of the pipe 10 is totally washed by the cooling fluid F contained in the heat exchanger vessel 2.

In an alternative variant, not illustrated, said pipe can be substituted with plate type heat exchanger means.

Said device 1 comprises a milk foaming pump unit 14 positioned downstream of the heat exchanger means 3, in particular of their delivery outlet 3b of the cooled milk. Said pump unit 14 draws the milk to be cooled by means of the duct 11 positioned between said supply inlet 3a and its containing means 12, determining its forced passage through the heat exchanger means 3.

Said cooling circuit for said fluid F comprises:
- a storage tank 4 for said cooling fluid F;
- cooling means 15 for said cooling fluid F comprising a refrigeration circuit;
- delivery 5 and return 6 ducts adapted to connect said tank 4 to said heat exchanger vessel 2 respectively at said inlet 2a and at said outlet 2b;
- a recirculation pump 7 for said cooling fluid F.

Said storage tank 4 comprises bleed means 9 adapted to place the inner volume of the tank 4 positioned above said free surface level in communication with the external environment, so that it is not hermetically closed.

Said recirculation pump 7 is positioned below the free surface level of filling of said storage tank 4.

In the variant illustrated, said recirculation pump 7 is of submersible type, is arranged inside said tank 4 and connected to said delivery duct 5.

In the variant of Fig. 1, said recirculation pump 7 has no one-way valve.

In an alternative variant, said recirculation pump 7 could be external to said tank 4 and subsequently intercept said delivery duct 5.

Said return duct 6 comprises an upside-down U-shaped pipe.

Said U-shaped pipe is provided with a first 6' and with a second 6" arm whose free ends are both connected to said storage tank 4, above the free surface of its filling level and hence without touching the cooling fluid F contained therein.

In a possible variant of embodiment (not illustrated) the free end of said first arm 6' could be immersed in said cooling fluid F, hence below said free surface level.

Said first arm 6' comprises a hole 8, acting as overflow by-pass, provided in the portion of said first arm 6' inside said heat exchanger vessel 2.

Said hole 8 is adapted to determine the level of filling of said vessel 2 reached by said cooling fluid F.

Said second arm 6" allows air to enter and promote the outflow of the cooling fluid F toward the storage tank 4, through the by-pass hole 8 and through the first arm 6'.

At the same time, said hole 8 is adapted to promote the inflow of air into said heat exchanger vessel 2 through said first 6' and second 6" arm, to facilitate emptying thereof.

In the variant of Fig. 2, said delivery duct 5 comprises a one-way valve 17.

Said device 1 comprises a suitable discharge duct 16 connected between the bottom of said heat exchanger vessel 2 and said storage tank 4. Arranged along said discharge duct 16 is a solenoid valve 18 adapted to allow emptying of said heat exchanger vessel 2, also in the case in which the recirculation pump 7 is still operating.

Operation of the cooling device 1 that can be automatically sanitized according to the invention is described below.

When the device 1 is activated, the recirculation pump 7 of the cooling circuit pushes the cooling fluid F from the tank 4 inside the heat exchanger vessel 2 until reaching the height of the by-pass hole 8 provided on the first arm 6' of the return duct 6. When the cooling fluid F has reached the by-pass hole 8 it flows into the return duct 6 and is discharged into the storage tank 4, balancing the inflow rate.

Discharge is promoted by the air that reaches the by-pass hole 8 through the second arm 6".

As stated above, the milk foaming pump unit 14 draws the milk to be cooled from the containing means 12 and conveys it into the serpentine 10 of the heat exchanger means 3, where it transfers heat to the cooling fluid F that, in turn, by washing the lateral surface of said pipe 10, lowers the temperature of the milk.

The milk flowing out of the delivery outlet 3b is drawn by the milk foaming pump unit 14 to prepare the foamed milk.

After the work to prepare beverages based on foamed milk has been completed, or each time this is required, the cleaning and sanitizing cycle of the cooling device starts.

The steps of the sanitizing process, controlled manually by means of an activation button or automatically at adjustable time intervals with respect to the last use of the device, with particular reference to the variant of Fig. 1, are the following:
- the recirculation pump 7 switches off;
- the heat exchanger vessel 2 starts to empty through the delivery duct 5 without one-way valve, aided by the air entering the vessel 2 through the upside-down U-shaped return duct 6 and passing through the by-pass hole 8;
- when the heat exchanger vessel 2 is completely empty and all the cooling fluid F has been temporarily stored in the tank 4, the surface of the pipe 10 of the heat exchanger means 3 tends to reach room temperature;
- the operator must only move the duct 11 connected to the supply inlet 3a of the heat exchanger means 3 from the means for containing milk to be cooled 12 to the means for containing the sanitizing product 13 chosen for automatic cleaning of the device 1;
- the sanitizing product, drawn up by the milk foaming pump unit 14, passes through the whole of the pipe 10 of the heat exchanger means 3 at high pressure, acting with its cleansing action, and is then collected in a discharge tray (not illustrated) positioned downstream of the milk foaming pump unit 14;
- after sanitizing has been completed and all the sanitizing product has been removed, when the heat exchanger means 3 are once again empty and clean, the recirculation pump 7 is switched on again, refilling the heat exchanger vessel 2 with the cooling fluid F up to the free surface level determined by the by-pass hole 8;
- the duct 11 connected to the supply inlet 3b is repositioned at the means for containing the milk 12 and the device 1 is once again ready to operate in combination with the automatic dispensing machine of beverages based on foamed milk.

## Claims

1. Milk cooling device (1) that can be automatically sanitized, comprising:
- a heat exchanger vessel (2) adapted to contain a cooling fluid (F), comprising a bottom (20), an inlet (2a) and an outlet (2b) for said fluid (F);
- heat exchanger means (3) adapted to receive said milk to be cooled immersed in said heat exchanger vessel (2), comprising a supply inlet (3a) for said milk to be cooled and a delivery outlet (3b) of the cooled milk;
- a cooling circuit for said fluid (F) comprising:
- a storage tank (4) for said cooling fluid (F) having a free surface level;
- cooling means for said cooling fluid;
- delivery (5) and return (6) ducts adapted to connect said storage tank (4) to said heat exchanger vessel (2) respectively at said inlet opening (2a) and said outlet opening (2b);
- a recirculation pump (7) for said cooling fluid connected to said delivery duct (5),
**characterized in that**:
- said inlet (2a) for said cooling fluid (F) is arranged in proximity of said bottom (20) of said heat exchanger vessel (2);
- said return duct (6) comprises an upside-down U-shaped pipe, provided with a first (6') and with a second (6") arm whose free ends are both connected to said storage tank (4), and at least one of them is connected above said free surface level;
- said first arm (6') comprises a hole (8), acting as overflow by-pass, provided in the portion of said first arm (6') inside said heat exchanger vessel (2), and said hole (8) is adapted to determine the level of filling of said heat exchanger vessel (2) with said cooling fluid (F),
where said heat exchanger vessel (2) is adapted to be emptied with the contribution of air entering through said hole (8).

2. Device (1) according to claim 1, **characterized in that** it is the free end of said second arm (6") that is connected to said storage tank (4) above said free surface level.

3. Device (1) according to claim 1, **characterized in that** said heat exchanger vessel (2) is adapted to be emptied through said delivery duct (5) when said recirculation pump (7) is switched off, or through a suitable discharge duct (16) connected between the bottom of said heat exchanger vessel (2) and said storage tank (4).

4. Device (1) according to claim 1, **characterized in that** said recirculation pump (7) is positioned below the filling level of said storage tank (4).

5. Device (1) according to claim 4, **characterized in that** said recirculation pump (7) is of submersible type, contained inside said storage tank (4).

6. Device (1) according to claim 1, **characterized in that** said cooling means comprise a refrigeration circuit (15) provided with a compressor.

7. Device (1) according to claim 1, **characterized in that** said storage tank (4) comprises bleed means (9) adapted to place the inner volume of the tank (4) positioned above said free surface in communication with the external environment.

8. Device (1) according to claim 1, **characterized in that** said heat exchanger means (3) are of the closed loop type and comprise at least one pipe (10), arranged between said supply inlet (3a) and said delivery outlet (3b).

9. Device (1) according to claim 6, **characterized in that** said pipe (10) is in the shape of a serpentine.

10. Device (1) according to claim 1, **characterized in that** it comprises a duct (11) adapted to connect said supply inlet (3a) alternatively to means for containing milk to be cooled (12) or to means for containing a sanitizing product (13) for automatic cleaning of said device (1).

11. Device (1) according to claim 1, **characterized in that** it comprises a milk foaming pump unit (14).

12. Multi-function machine for dispensing beverages comprising foamed milk **characterized in that** it comprises a milk cooling device (1) that can be sanitized automatically according to at least one of the preceding claims.
